# EUROPEAN PATENT SPECIFICATION

(11) **EP 3 851 925 B1**
(45) Date of publication and mention of the grant of the patent: **18.10.2023**
(21) Application number: 19861108.9
(22) Date of filing: 02.09.2019
(51) Int. Cl.: H04L 12/46, G05B 19/418, H04L 12/40, H04L 12/403, H04J 3/06

(54) **A SYNCHRONISED CONTROL SYSTEM**
SYNCHRONISIERTES STEUERSYSTEM
SYSTÈME DE COMMANDE SYNCHRONISÉ

(30) Priority: 14.09.2018 JP 2018172136
(43) Date of publication of application: 21.07.2021
(73) Proprietor: OMRON Corporation, Shiokoji-dori, Shimogyo-ku, Kyoto-shi Kyoto 600-8530 (JP)
(72) Inventor: YONEDA, Mitsuhiro, Kizugawa-shi, Kyoto 619-0283 (JP); SAWADA, Shigenori, Kizugawa-shi, Kyoto 619-0283 (JP)
(74) Representative: Becker, Eberhard
(86) International application number: PCT/JP2019/034428
(87) International publication number: WO 2020/054477

(56) References cited:
- EP-A1- 3 026 515
- WO-A1-2015/128981
- WO-A1-2018/057322
- US-A1- 2018 109 655

## Description

### BACKGROUND

### Technical Field

The present invention relates to a control system in which a plurality of control devices are connected through a network, and a control device configuring the control system.

### Related Art

In various production sites, factory automation (FA) technology using a control device such as a programmable controller (PLC) or the like is widely used. This control device controls an operation of one or more instruments by transmitting/receiving data to/from the one or more instruments via a network.

With increasing functionality of a control system, a configuration is also being realized in which a plurality of control devices that execute control processes independent of each other are connected via a network. For example, Japanese Patent Laid-open No. 2015-118505 (patent literature 1) discloses a control system in which a plurality of control devices are connected to a controller level network. A plurality of input/output devices are connected to each of the plurality of control devices via a device level network. Each control device transmits input values acquired from the plurality of input/output devices to a server via the controller level network.

Patent literature EP 3026515 A1 discloses a specific controller including a first cycle generation unit that determines a first cycle start timing of itself on the basis of a second cycle start timing of itself. In the patent literature EP 3026515 A1, different controllers each has a first cycle synchronization unit that synchronizes the first cycle start timing of itself with a first cycle start timing of the specific controller and a second cycle correction unit that synchronizes a second cycle start timing of the specific controller with a second cycle start timing of itself by correcting the second cycle start timing of itself.

Patent literature US 2018/0109655 A1 discloses a configuration for realizing time synchronization between different protocols. In the patent literature US 2018/0109655 A1, a control device that constitutes a control system for controlling machines or facilities is provided, in which the control device includes first and second communication means configured to transmit and receive data in accordance with a first and second protocol. The first and second communication means include a first and second timer that defines a time of data transmission and is time-synchronized with an entity to and from which data is transmitted and received.

### [Literature of related art]

### [Patent literature]

Patent literature 1: Japanese Patent Laid-open No. 2015-118505

### SUMMARY

### [Problems to be Solved]

At a manufacturing site, a production line is rearranged for various reasons such as changing production varieties, increasing the number of productions, and the like. In this case, desirably, a new control device is connected to the control device that is already in operation, and instruments connected to each of the two control devices are operated in coordination with each other.

Because the plurality of control devices execute control processes independent of each other, in order to operate the plurality of instruments connected to mutually different control devices in coordination with each other, initiation timings of the processes for a control subject in the plurality of instruments are required to be synchronized. Therefore, all the control devices including the control device already in operation are required to be temporarily stopped, and settings for the synchronization are required to be performed. As a result, an operating rate is reduced.

The present invention is completed in view of the above problems, and an object of the present invention is to provide a control system and a control device which can cause a plurality of instruments connected to mutually different control devices to operate in coordination with each other while suppressing a reduction in operation rate.

### [Means to Solve Problems]

The present invention is defined in the appended independent claim 1 to which reference should be made. Advantageous features are set out in the appended dependent claims.

### BRIEF DESCRIPTION OF THE DRAWINGS

FIG. 1 is a diagram schematically showing an outline of a control system according to an embodiment.
FIG. 2 is a schematic diagram showing an example of an overall configuration of the control system according to the embodiment.
FIG. 3 is a schematic diagram showing a network configuration example of the control system according to the embodiment.
FIG. 4 is a block diagram showing a hardware configuration example of a control device and a field instrument according to the embodiment.
FIG. 5 is a schematic diagram showing an example of a software configuration of the control device according to the embodiment.
FIG. 6 is a schematic diagram for illustrating scheduling of control processes in the control device according to the embodiment.
FIG. 7 is a schematic diagram for illustrating a first specific example of an adjustment process in the control device according to the embodiment.
FIG. 8 is a schematic diagram for illustrating a second specific example of the adjustment process in the control device according to the embodiment.
FIG. 9 is a flowchart showing an example of a flow of a connection process between a plurality of control devices according to the embodiment.
FIG. 10 is a flowchart showing another example of the flow of the connection process between the plurality of control devices.
FIG. 11 is a schematic diagram showing a first application example of the control system according to the embodiment.
FIG. 12 is a schematic diagram showing a second application example of the control system according to the embodiment.
FIG. 13 is a schematic diagram showing a third application example of the control system according to the embodiment.

### DESCRIPTION OF THE EMBODIMENTS

An embodiment according to the present invention is described below with reference to the drawings. In the following description, the same components and constituent elements are designated by the same reference signs. Names and functions thereof are also the same. Therefore, detailed description thereof is not repeated.

### §1 Application example

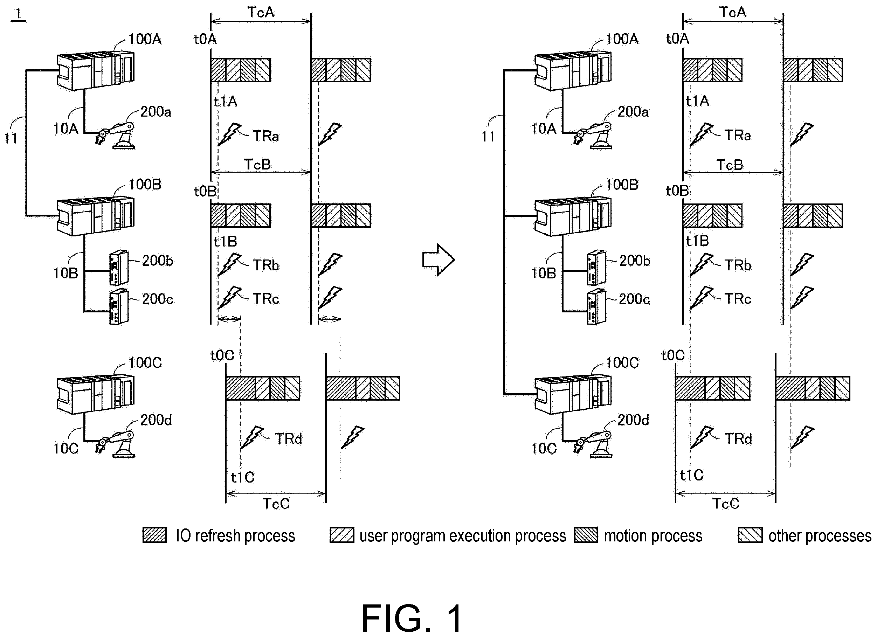

First, an example of a situation in which the present invention is applied is described with reference to FIG. 1. FIG. 1 is a diagram schematically showing an outline of a control system according to an embodiment.

As shown in FIG. 1, the control system 1 according to the embodiment includes control devices 100A, 100B, and 100C, and field instruments 200a, 200b, 200c, and 200d. The control device 100A is connected to the field instrument 200a via a field network 10A. The control device 100B is connected to the field instruments 200b and 200c via a field network 10B. The control device 100C is connected to the field instrument 200d via a field network 10C. Moreover, the number of the field instruments connected to each of the control devices 100A to 100C is not limited to one or two. That is, one or more field instruments are connected to each of the control devices 100A to 100C.

The control devices 100A to 100C respectively execute an input/output (IO) refresh process, a user program execution process, a motion process, and other processes in each control period TcA to TcC.

The IO refresh process is a process of transmitting/receiving data between a control device and a field instrument.

The user program execution process is a process of executing a program arbitrarily created by a user.

The motion process is a process of calculating, as instructions, numerical values such as position, velocity, acceleration, jerk, angle, angular velocity, angular acceleration, angular jerk, and the like for an actuator such as a servomotor or the like arranged in a field instrument.

Other processes include various processes other than the IO refresh process, the user program execution process, and the motion process.

Each of the control device 100A and the field instrument 200a has a timer synchronized with each other. The control device 100A transmits/receives data to/from the field instrument 200a in each control period TcA based on time of the timer. The control device 100A sets a synchronization timing t1A after the field instrument 200a receives the data in the control period TcA. The field instrument 200a initiates the processes for a control subject in synchronization with the synchronization timing t1A based on time of the timer synchronized with the control device 100A. Specifically, the field instrument 200a generates a trigger signal TRa when the time of the timer reaches the synchronization timing t1A, and initiates the processes for the control subject in response to the generation of the trigger signal TRa.

Each of the control device 100B and the field instruments 200b and 200c has a timer synchronized with each other. The control device 100B transmits/receives data to/from the field instruments 200b and 200c in each control period TcB based on time of the timer. The control device 100B sets a synchronization timing t1B after the field instruments 200b and 200c receive the data in the control period TcB. The field instruments 200b and 200c initiate the processes for the control subject in synchronization with the synchronization timing t1B based on the time of the timer synchronized with the control device 100B. Specifically, the field instrument 200b generates a trigger signal TRb when the time of the timer reaches the synchronization timing t1B, and respectively initiates the processes for the control subject in response to the generation of the trigger signal TRb. Similarly, the field instrument 200c generates a trigger signal TRc when the time of the timer reaches the synchronization timing t1B, and respectively initiates the processes for the control subject in response to the generation of the trigger signal TRc.

Each of the control device 100C and the field instrument 200d has a timer synchronized with each other. The control device 100C transmits/receives data to/from the field instrument 200d in each control period TcC based on time of the timer. The control device 100C sets a synchronization timing t1C after the field instrument 200d receives the data in the control period TcC. The field instrument 200d initiates the processes for the control subject in synchronization with the synchronization timing t1C based on the time of the timer synchronized with the control device 100C. Specifically, the field instrument 200d generates a trigger signal TRd when the time of the timer reaches the synchronization timing t1C, and initiates the processes for the control subject in response to the generation of the trigger signal TRd.

The processes for the control subject are, for example, a process of collecting field information from the control subject such as a machine, an equipment, or the like, a process of outputting an instruction signal to the control subject such as a machine or an equipment, and other processes.

In the example shown in FIG. 1, the control device 100A and the control device 100B are connected in advance via a network 11 higher than the field networks 10A and 10B. Then, various settings for causing the synchronization timing t1A and the synchronization timing t1B to coincide are made in advance between the control device 100A and the control device 100B.

Specifically, a length of the control period TcA of the control device 100A and a length of the control period TcB of the control device 100B are set to be the same. Furthermore, phases of the control periods TcA and TcB are set in a manner that an initiation timing t0A of the IO refresh process in the control period TcA coincides with an initiation timing t0B of the IO refresh process in the control period TcB. Furthermore, a temporal difference between the initiation timing t0A and the synchronization timing t1A in the control period TcA and a temporal difference between the initiation timing t0B and the synchronization timing t1B in the control period TcB are set to be the same. Thereby, the field instruments 200a to 200c connected to the control devices 100A and 100B can initiate the processes for the control subject at the same time. As a result, the field instruments 200a to 200c operate in coordination with each other.

When the control device 100C is not connected to the control devices 100A and 100B via the network 11, the control device 100C controls the field instrument 200d independently of the control devices 100A and 100B. Therefore, as shown on the left side of FIG. 1, the synchronization timing t1C in the control period TcC does not coincide with the synchronization timings t1A and t1B. As a result, the field instrument 200d cannot operate in coordination with the field instruments 200a to 200c connected to the control devices 100A and 100B.

When the control device 100C is connected to the control devices 100A and 100B via the network 11, the control device 100C adjusts at least one of the following (a) to (c) in order that the synchronization timing t1C in the control period TcC coincides with the synchronization timings t1A and t1B.
(a) Length of the control period TcC,
(b) Phase difference of the control period TcC with respect to the control periods TcA and TcB, and
(c) Temporal difference between the reference timing (for example, an initiation timing t0C of the IO refresh process) and the synchronization timing t1C of the control period TcC.

In the example shown on the right side of FIG. 1, a length of the control period TcC is adjusted to be one time the length of the control periods TcA and TcB. Furthermore, a phase difference of the control period TcC with respect to the control periods TcA and TcB is adjusted in order that the synchronization timing t1C coincides with the synchronization timings 11A and 11B. Thereby, the synchronization timing t1C coincides with the synchronization timings t1A and t1B. As a result, the field instrument 200d can operate in coordination with the field instruments 200a to 200c connected to the control devices 100A and 100B.

According to the embodiment, when the control device 100C is connected to the control devices 100A and 100B, the control devices 100A and 100B are not required to adjust the length of the control period, the phase of the control period, and the temporal difference between the synchronization timing and the reference timing in the control period. Therefore, even when the control devices 100A and 100B are in operation, the control device 100C can be connected to the control devices 100A and 100B via the network 11, and the coordination operations of the field instruments 200a to 200d can be initiated. That is, the control devices 100A and 100B are required to be stopped in order to initiate the coordination operations of the field instruments 200a to 200d. This makes it possible to cause the plurality of the field instruments 200a to 200d connected to the mutually different control devices 100A to 100C to operate in coordination with each other while suppressing a reduction in operation rate.

### §2 Configuration example

The embodiment of the disclosure is described in detail with reference to the drawings. In the following description, a programmable logic controller (PLC) is described as a specific example of the "control device", but the technical concept disclosed in the specification is not limited to the name of the PLC and can be applied to any control device.

### <A. Overall configuration of control system>

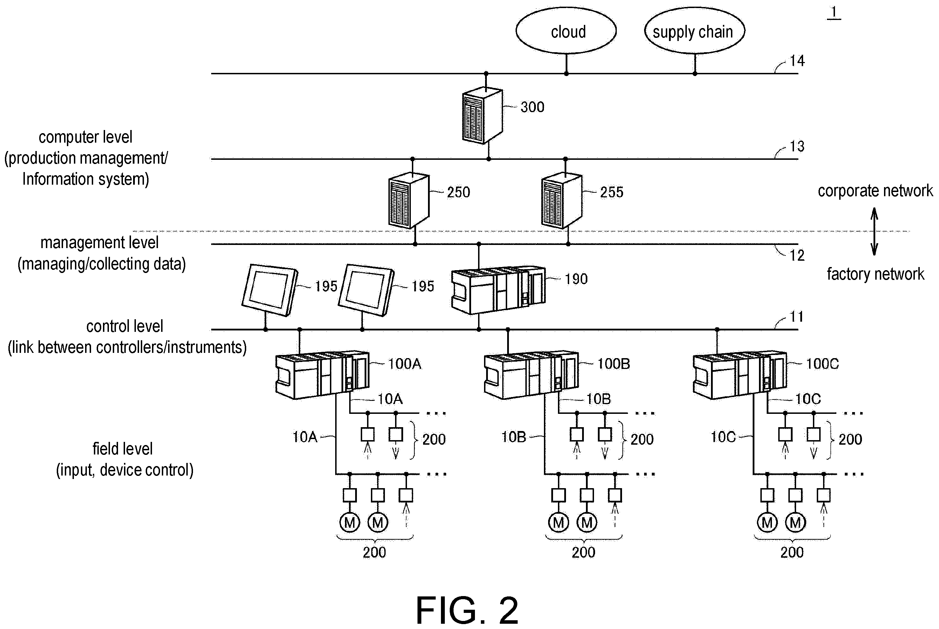

First, an overall configuration of the control system according to the embodiment is described. FIG. 2 is a schematic diagram showing an example of the overall configuration of the control system 1 according to the embodiment.

With reference to FIG. 2, in the control system 1, multiple levels of networks are connected, and different functions are respectively assigned to the networks at each level. Specifically, four levels of networks 11 to 14 are arranged.

The network 11 is a control level network. A device/line management device 190, which is a device/line management instrument, and a display device 195, which provides a supervisory control and data acquisition (SCADA) function, are connected to the network 11, and the plurality of control devices 100A to 100C (hereinafter, may also be collectively referred to as "the control devices 100"), which are machine control instruments, can be connected to the network 11. A link in which data can be transmitted between the connected devices is formed in the network 11. The network 11 establishes a data link between the controllers (the control devices 100) and the management instruments (the device/line management device 190 and the display device 195). The network 11 mainly provides the transmission of information related to the control system as a main function.

Various field instruments such as sensors and actuators are connected to the control devices 100. These field instruments may be directly connected via input/output units mounted on the control devices 100, or may be connected via field networks. In the configuration example shown in FIG. 1, one or more field networks 10A to 10C are respectively configured in the control devices 100A to 100C. One or more field instruments 200 are connected to each of the field networks 10A to 10C (hereinafter, may also be collectively referred to as "the field networks 10"). Each of the one or more field instruments 200 includes an actuator that gives some physical action to a manufacturing device, a production line, or the like (hereinafter, also collectively referred to as "field"), an input/output device that exchanges information with the field. Thus, in addition to the four levels of the networks 11 to 14, a field level network is further added to the control system 1 shown in FIG. 1.

Data is transmitted/received between the control device 100 and the field instrument 200 via the field network 10 (the IO refresh process). The transmitted/received data is updated in a very short control period of several hundred µsec order to several tens of msec order.

The network 12 is a management level network in which the device/line management device 190, a manufacturing management device 250, and a database device 255 are connected, and a link capable of transmitting data between the devices is formed. The network 12 provides management information exchange and device/line information transmission as main functions.

The network 13 is a computer level network in which the manufacturing control device 250 and the database device 255 are connected to a production management device 300 that manages a production plan and the like, and a link capable of transmitting data between the devices is formed. The network 13 provides production management and information system data transmission as main functions.

The network 14 is an external network such as the Internet or the like, and the production management device 300 is connected to a cloud, a supply chain, or the like.

In the control system 1 shown in FIG. 2, the network 12 and lower levels are also referred to as "factory networks" and provide control system communication of exchanging data for actually controlling the instruments (hereinafter, may also be collectively referred to as "the control system data"). On the other hand, the network 13 and higher levels are also referred to as "corporate networks" and provide information system communication of exchanging data for monitoring, managing, and controlling production activities at production lines/factories (hereinafter, may also be collectively referred to as "the information system data").

For the networks 11 to 14 and field networks 10A to 10C, protocols and frameworks are adopted according to differences in the aforementioned required characteristics. For example, as the protocol of the networks 11 and 12 belonging to the factory network, EtherNet/IP (registered trademark) may be used which is an industrial open network in which a control protocol is implemented on general-purpose Ethernet (registered trademark). In addition, as the protocol of the field networks 10A to 10C, EtherCAT (registered trademark), which is an example of a machine control network, may be adopted. Moreover, the protocol of the network 11 (first protocol) and the protocol of the field networks 10A to 10C (second protocol) may be the same or different.

By adopting a network technology suitable for this machine control, real-time performance in which the time required for the transmission between the instruments is guaranteed can be provided. However, there is a limit to the amount of data that can be transmitted in one communication period.

On the other hand, as a protocol of the networks 13 and 14 belonging to the corporate network, general-purpose Ethernet (registered trademark) or the like is used in order to ensure diversity of connection destinations. By adopting the general-purpose Ethernet (registered trademark), the real-time performance cannot be realized, but there is no limit to the amount of data that can be transmitted.

### <B. Network configuration example>

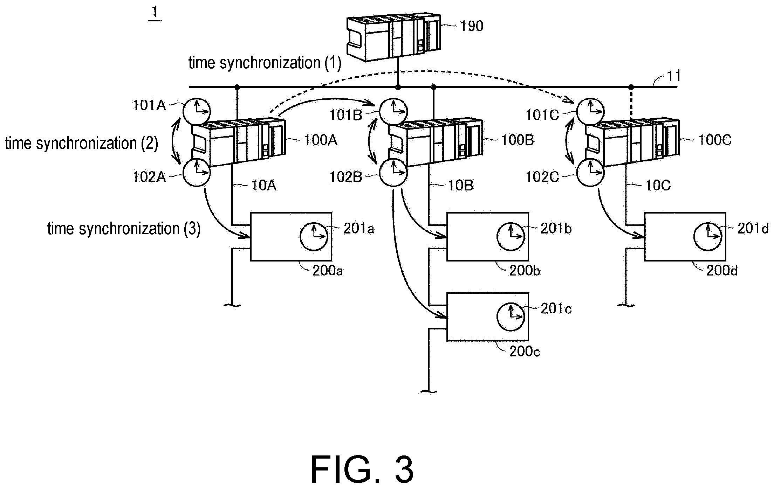

Next, a network configuration example of the control system 1 according to the embodiment is described. FIG. 3 is a schematic diagram showing the network configuration example of the control system 1 according to the embodiment.

The control system 1 shown in FIG. 3 includes the plurality of control devices 100A to 100C and the plurality of field instruments 200a to 200d. As an example, the control system 1 adopts a network in which at least some of the control devices are daisy-chained. The control devices 100A to 100C respectively operate as a master that manages the data transmission in the field networks 10A to 10C. The field instruments 200a to 200d operate as slaves that perform the data transmission according to an instruction from the corresponding master.

The control devices 100A and 100B are connected to the control level network 11 (upper network). For example, the device/line management device 190 is connected to the network 11.

The control device 100C is connected to the network 11 when the field instrument 200d is operated in coordination with the field instruments 200a to 200c. The control device 100C is disconnected from the network 11 when the field instrument 200d is not operated in coordination with the field instruments 200a to 200c. Moreover, the control devices 100A to 100C and the network 11 may be connected by wired communication or wireless communication.

A plurality of field instruments including the field instrument 200a are sequentially connected in a daisy chain in the field network 10A connected to the control device 100A. A plurality of field instruments including the field instruments 200b and 200c are sequentially connected in a daisy chain in the field network 10B connected to the control device 100B. A plurality of field instruments including the field instrument 200d are sequentially connected in a daisy chain in the field network 10C connected to the control device 100C.

In each of the field networks 10A to 10C, the control device 100 and the one or more field instruments 200 can all be regarded as communication devices that perform the data transmission operations. In the example shown in FIG. 3, when each of the control device 100 and the one or more field instruments 200 receives data from upstream communication devices connected adjacently, the data is transmitted as necessary to downstream communication devices connected adjacently. Moreover, when the received data is addressed to the device itself, the received data is not transmitted to another communication device, and the device that receives this data processes this data.

In the control system 1 according to the embodiment, the transmission/reception timings are time-synchronized (corresponding to time synchronization (3) in the diagram) between the plurality of communication devices configuring each of the field networks 10A to 10C, that is, the control device 100 and the one or more field instrument 200. Specifically, each of the control device 100 and the one or more field instruments 200 has a timer that is time-synchronized with each other, and each of the control device 100 and the one or more field instruments 200 determines the timing of transmission or reception of data according to these time-synchronized timers. Moreover, the timer may be a counter that is synchronously incremented or decremented.

In the example shown in FIG. 3, the control device 100A has a timer 102A, and the field instrument 200a has a timer 201a. The timer 102A operates as a master, and the timer 201a synchronizes timings with reference to the master.

The control device 100B has a timer 102B, the field instrument 200b has a timer 201b, and the field instrument 200c has a timer 201c. The timer 102B operates as a master, and the timers 201b and 201c synchronize timings with reference to the master.

The control device 100C has a timer 102C, and the field instrument 200d has a timer 201d. The timer 102C operates as a master, and the timer 201d synchronizes timings with reference to the master.

That is, the control devices 100A to 100C respectively operate as a master that manages the data transmission in the field networks 10A to 10C. The field instrument 200 connected to each control device 100 operates as a slave that performs the data transmission according to an instruction from the master. By synchronizing the timers between the master and the slave, the data transmission timing and the like can be made to coincide with each other between the control device 100 and the field instrument 200 configuring the field network 10.

In the example shown in FIG. 3, the control device 100A further has a timer 101A that is time-synchronized with the timer 102A. The control device 100B further has a timer 101B that is time-synchronized with the timer 102B. The control device 100C further has a timer 101C that is time-synchronized with the timer 102C (corresponding to time synchronization (2) in the diagram).

In the control system 1, any one of the timers 101A and 101B is operated as the master of the entire control system 1. Hereinafter, the master of the entire system is also referred to as a "grand master clock".

As an example, in FIG. 3, the timer 101A of the control device 100A is set as the ground master clock, and the timer 101B of the control device 100B time-synchronizes with the grand master clock. Furthermore, when the control device 100C is connected to the network 11, the timer 101C of the control device 100C time-synchronizes with the ground master clock. Thereby, the plurality of control devices 100A to 100C connected to the network 11 can be time-synchronized with each other (corresponding to time synchronization (1) in the diagram).

Moreover, although the configuration example in which the timer 101A of the control device 100A is set as the ground master clock has been described in FIG. 3, a timer of an external device may also be set as the ground master clock.

### <C. Hardware configuration example of control device and field instrument>

Next, hardware configurations of the control devices 100 (100A to 100C) and the field instruments 200 (200a to 200d) according to the embodiment are described.

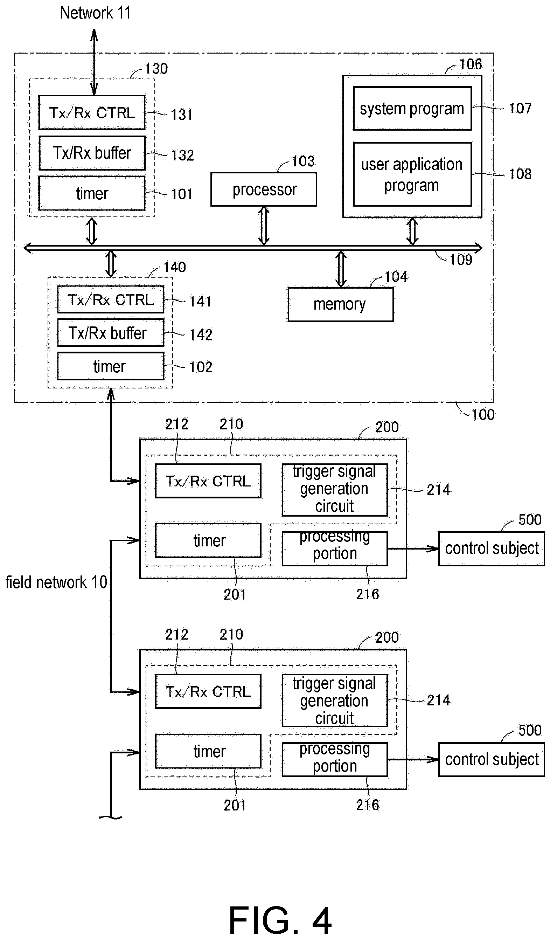

FIG. 4 is a block diagram showing a hardware configuration example of the control device and the field instrument according to the embodiment. The control device 100 may typically be configured on the basis of a programmable controller (PLC).

With reference to FIG. 4, the control device 100 includes, as main components, a processor 103, a memory 104, a storage 106, a network controller 130, and a field network controller 140.

The processor 103 realizes various processes by reading and executing a system program 107 and a user application program 108 stored in the storage 106. The memory 104 is constituted of a volatile storage device such as a dynamic random access memory (DRAM), a static random access memory (SRAM), or the like. The storage 106 stores, in addition to the system program 107 for controlling each part of the control device 100, the user application program 108 designed according to the control subject or the like.

The network controller 130 provides an interface for the control device 100 to exchange data with other devices via the network 11. The network controller 130 includes, as main components, a transmission/reception controller 131, a transmission/reception buffer 132, and a timer 101. The timer 101 corresponds to the timer 101A (see FIG. 3) in the control device 100A, corresponds to the timer 101B in the control device 100B, and corresponds to the timer 101C in the control device 100C.

The transmission/reception controller 131 performs processes related to generation and reception of a packet transmitted at a given period on the network 11. Specifically, the transmission/reception controller 131 writes, to the transmission/reception buffer 132, the data stored in the packet received from the network 11. The transmission/reception controller 131 sequentially reads the received packet written in the transmission/reception buffer 132, and outputs, to the processor 103, only the data necessary for the process in the control device 100 of the read data. The transmission/reception controller 131 sequentially writes, to the transmission/reception buffer 132, the data or the packet to be transmitted to another device in accordance with an instruction from the processor 103. The data stored in the transmission/reception buffer 132 is sequentially transmitted on the network controller 130 according to the period in which the packet is transferred.

The timer 101 generates a pulse that serves as a reference timing for directing data transmission or the like from the transmission/reception controller 131. As the timer 101, a real-time clock or a free-run counter that counts up (increments) at a predetermined period can be used. The free-run counter can calculate a current time by treating an output count value as an elapsed time from a certain point in time, and can thereby be operated as a timer.

The field network controller 140 provides an interface for the control device 100 to transmit/receive data to/from the field instrument 200 via the field network 10. The field network controller 140 includes, as main components, a transmission/reception controller 141, a transmission/reception buffer 142, and a timer 102. The transmission/reception controller 141 transmits/receives data to/from the field instrument 200 in each control period Tc based on time of the timer 102. Operations of these components are similar to the operations of the corresponding components of the network controller 130, and thus detailed description is not repeated. Moreover, the timer 102 corresponds to the timer 102A (see FIG. 3) in the control device 100A, corresponds to the timer 102B in the control device 100B, and corresponds to the timer 102C in the control device 100C.

The field instrument 200 processes a control subject 500 such as a machine, an equipment, or the like according to the control by the control device 100. Typically, the field instrument 200 performs a process of collecting field information from the control subject 500, a process of outputting an instruction signal to the control subject 500, and the like. The field instrument 200 includes, as main components, a field network controller 210 and a processing portion 216.

The field network controller 210 provides an interface for the field instrument 200 to transmit/receive data to/from the control device 100 via the field network 10. The field network controller 210 includes, as main components, a transmission/reception controller 212, a timer 201, and a trigger signal generation circuit 214.

The transmission/reception controller 212 writes and reads data for a communication frame transferred on the field network 10.

The timer 201 generates a clock that serves as a reference for the timings of the instruction output to the transmission/reception controller 212, the process execution in the field instrument 200, and the like. A real-time clock or a free-run counter is used as the timer 201. Moreover, the timer 201 corresponds to the timer 201a (see FIG. 3) in the field instrument 200a, corresponds to the timer 201b in the field instrument 200b, corresponds to the timer 201c in the field instrument 200c, and corresponds to the timer 201d in the field instrument 200d.

When the time indicated by the timer 201 reaches a synchronization timing t1, the trigger signal generation circuit 214 generates a trigger signal TR and outputs the trigger signal TR to the processing portion 216. The synchronization timing t1 is set when the control device 100 is started. That is, the control device 100 recognizes the configuration of the field instrument 200 connected to the field network 10 at the time of start, and sets the synchronization timing t1 in consideration of the number of connected field instruments 200 and communication delay of each field instrument 200. Moreover, the synchronization timing t1 may be adjusted according to a direction of a user. The synchronization timings t1 set by the control devices 100A to 100C are respectively the synchronization timings t1A to t1C (see FIG. 1). The trigger signals TR generated by the field instruments 200a to 200d are respectively the trigger signals TRa to TRd (see FIG. 1).

When EtherCAT (registered trademark) is used as the protocol of the field network 10, the trigger signal generation circuit 214 may generate a synchronization signal Sync0 defined by EtherCAT (registered trademark) as the trigger signal TR.

The processing portion 216 performs the processes for the control subject 500. When receiving the trigger signal TR from the trigger signal generation circuit 214, the processing portion 216 initiates the processes for the control subject 500.

For example, when the control subject 500 is a servomotor, the processing portion 216 generates a command for the servomotor based on an instruction from the control device 100 and operates the servomotor according to the generated command. Furthermore, an encoder is arranged on a rotation shaft of the servomotor, and the processing portion 216 collects field information such as a position (rotation angle), a rotation velocity, a cumulative rotation number, and the like of the servomotor from the encoder.

When the control subject 500 is a robot, the processing portion 216 generates a command for the robot based on the instruction from the control device 100 and operates the robot according to the generated command. Specifically, the processing portion 216 operates one or more servomotors of the robot. Furthermore, an encoder is arranged on a rotation shaft of the servomotor, and the processing portion 216 collects field information such as a position (rotation angle), a rotation velocity, a cumulative rotation number, and the like of the servomotor from the encoder.

When the control subject 500 is a camera, the processing portion 216 outputs an image capturing direction to the camera and acquires image data obtained by image capturing.

### <D. Software configuration>

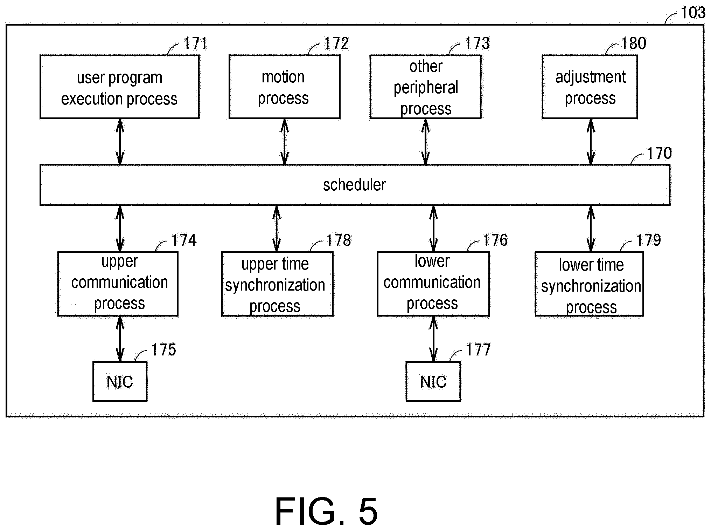

Next, an example of a software configuration of the control device 100 according to the embodiment is described. FIG. 5 is a schematic diagram showing an example of the software configuration of the control device according to the embodiment.

With reference to FIG. 5, a scheduler 170 is executed in the processor 103 of the control device 100. The scheduler 170 determines an execution order, execution interruption, and the like of a plurality of processes according to a predetermined control period Tc. More specifically, the scheduler 170 assigns, according to a predetermined priority, the control period Tc and the like, process resources (processor time, memory, and the like) to a user program execution process 171, a motion process 172, a peripheral process 173 including various processes, an upper network communication process 174, a lower network communication process 176, an upper network time synchronization process 178, a lower network time synchronization process 179, and an adjustment process 180.

Furthermore, the scheduler 170 sets the synchronization timing t1 at which the field instrument 200 connected via the field network 10 generates the trigger signal TR.

The user program execution process 171 includes a process related to the execution of the user application program 108 (see FIG. 4). The motion process 172 is a process of calculating a command to the actuator such as the servomotor included in the field instrument 200.

The upper network communication process 174 includes a process related to data regarding the upper network communication, for example, data creation, encoding, decoding, extraction, processing and editing, and the like. A network interface card (NIC) 175 is implemented in the processor 103. The NIC 175 is connected to a communication port (not shown) and manages the data transmission on the network 11. The upper network communication process 174 controls the network controller 130 (see FIG. 4) via the NIC 175.

Similarly, the lower network communication process 176 includes a process related to data regarding the lower network communication. A NIC 177 is implemented in the processor 103. The NIC 177 is connected to a communication port (not shown) and manages the data transmission on the field network 10. The lower network communication process 176 controls the field network controller 140 (see FIG. 4) via the NIC 177.

The upper network time synchronization process 178 includes a process related to time-synchronization with another control device 100. For example, when the timer 101 (see FIG. 4) of the own control device 100 is set as the ground master clock, the upper network time synchronization process 178 includes a process of adjusting the timer 101 of another control device 100 with reference to the own timer 101 in order to be time-synchronized with another control device 100, and other processes. Alternatively, when the timer 101 of another control device 100 is set as the ground master clock, the upper network time synchronization process 178 includes a process of adjusting the own timer 101 with reference to the timer 101 of another control device 100.

The lower network time synchronization process 179 includes a process related to time-synchronization with the field instrument 200. For example, when the timer 101 of the own control device 100 is set as the ground master clock, the lower network time synchronization process 179 includes a process of adjusting the own timer 102 (see FIG. 4) and the timer 201 of the field instrument 200 with reference to the own timer 101, and other processes. Alternatively, when the timer 101 of another control device 100 is set as the ground master clock, the lower network time synchronization process 179 includes a process of adjusting the own timer 102 and the timer 201 of the field instrument 200 with reference to the timer 101 of another control device 100.

When connected to another control device 100, the adjustment process 180 is a process of adjusting at least one of the following (a) to (c) in order that the synchronization timing t1 set by another control device 100 coincides with the synchronization timing t1 set by the scheduler 170.
(a) Length of the control period Tc of the own control device 100,
(b) Phase difference of the own control period Tc with respect to the control period Tc of another control device 100,
(c) Temporal difference (offset time) between the reference timing (for example, the initiation timing t0 of the IO refresh process) and the synchronization timing t1 of the control period Tc of the own control device 100.

### <E. Scheduling of control process>

Next, scheduling of the control process in the control device 100 according to the embodiment is described.

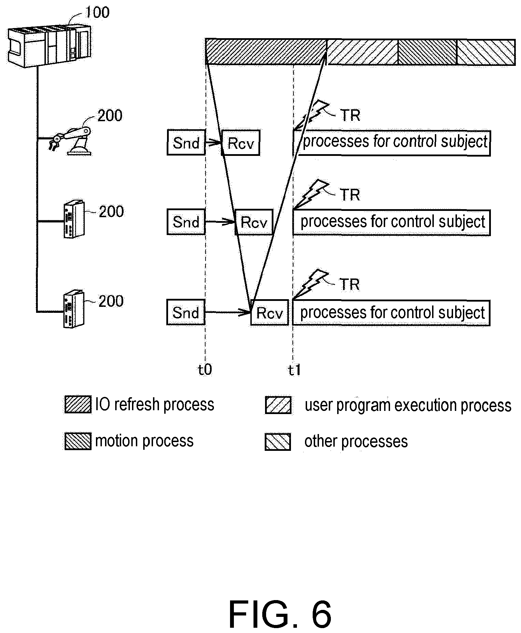

FIG. 6 is a schematic diagram for illustrating the scheduling of the control process in the control device according to the embodiment. In the example shown in FIG. 6, the IO refresh process, the user program execution process, the motion process, and other processes are executed in this order according to the predetermined control period Tc.

In the IO refresh process, the output data calculated by the motion process in the immediately preceding control period Tc is given to the field instrument 200, and the input data is collected from the field instrument 200.

The field instrument 200 needs to receive new data from the control device 100 before initiating the process for the control subject. Therefore, the control device 100 sets the synchronization timing t1 in the control period Tc in a manner that the synchronization timing t1 is later than the timing at which all the field instruments 200 connected via the field network 10 receive the data. That is, the synchronization timing t1 is set in a manner that the time from the initiation timing t0 to the synchronization timing t1 is longer than the time from the initiation timing t0 of the IO refresh process to the timing at which all the field instruments 200 receive the data. Thereby, each field instrument 200 can generate the trigger signal TR at the synchronization timing t1 after receiving the data from the control device 100 and initiate the processes for the control subject 500.

### <F. First specific example of adjustment process>

Next, a first specific example of the adjustment process 180 (see FIG. 5) in the control device 100 according to the embodiment is described.

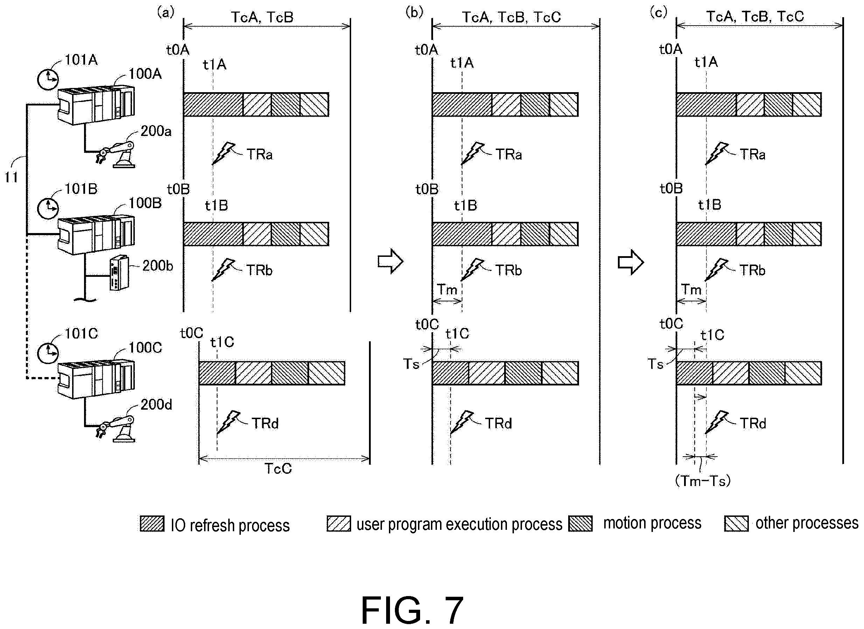

FIG. 7 is a schematic diagram for illustrating the first specific example of the adjustment process in the control device according to the embodiment. In the example shown in FIG. 7, various settings for causing the synchronization timing t1A and the synchronization timing t1B to coincide are made in advance between the control device 100A and the control device 100B. Then, the control device 100C is connected to the control devices 100A and 100B in operation via the network 11. The adjustment process 180 is invalidated in the control devices 100A and 100B in operation, and the adjustment process 180 is performed in the control device 100C. In addition, it is assumed that the timer 101A of the control device 100A is set as the ground master clock.

(a) of FIG. 7 shows a schedule of the control process of each control device when the control device 100C is not connected to the network 11. Because the control device 100C is not connected to the control devices 100A and 100B, the schedule of the control process of the control device 100C is independent of the schedule of the control process of the control devices 100A and 100B. That is, the synchronization timing t1C set by the control device 100C does not coincide with the synchronization timings t1A and t1B.

When the control device 100C is connected to the control devices 100A and 100B via the network 11, the length of the control period TcC is adjusted to be the same as the length of the control period TcA (= the control period TcB) by the adjustment process 180 of the control device 100C. Furthermore, the timer 101C of the control device 100C is adjusted by the upper network time synchronization process 178 (see FIG. 5) so as to synchronize the time with the timer 101A of the control device 100A.

(b) of FIG. 7 shows a schedule of the control process of each control device when the timer 101C is time-synchronized with the timer 101A. The control device 100C initiates the IO refresh process at the same timing as that of the control devices 100A and 100B according to the time of the timer synchronized with the control devices 100A and 100B. That is, the phase difference of the control period TcC with respect to the control periods TcA and TcB is adjusted in order that the initiation timing t0A of the IO refresh process in the control device 100A and the initiation timing t0C of the IO refresh process in the control device 100C coincide with each other. The initiation timings t0A, t0B, and t0C are respectively the timings at which the field network controller 140 of the controllers 100A, 100B and 100C initiates transmission of data.

However, a temporal difference Ts between the initiation timing t0C and the synchronization timing t1C in the control period TcC is different from a temporal difference Tm between the initiation timing t0A and the synchronization timing t1A in the control period TcA. In the example shown in FIG. 7, the temporal difference Ts is shorter than the temporal difference Tm. Therefore, even if the initiation timing t0C is matched to the initiation timing t0A, the field instrument 200d connected to the control device 100C cannot operate in coordination with the field instrument 200a connected to the control device 100A or the field instrument 200b connected to the control device 100B.

In order to make the synchronization timing t1C coincide with the synchronization timing t1A, the control device 100C performs the adjustment process 180 that lengthens the temporal difference between the initiation timing t0C and the synchronization timing t1C to Tm. That is, the temporal difference between the initiation timing t0C and the synchronization timing t1C is adjusted so as to be longer by a difference ΔT (= Tm - Ts).

As described above, the synchronization timing t1C is preset so as to be later than the timing at which all the field instruments 200 connected to the control device 100C receive the data. Therefore, even if the temporal difference between the initiation timing t0C and the synchronization timing t1C of the IO refresh process is lengthened, all the field instruments 200 can initiate the processes for the control subject 500 after receiving the data from the control device 100C.

(c) of FIG. 7 shows a schedule of the control process of each control device after the temporal difference between the initiation timing t0C and the synchronization timing t1C is adjusted. As shown in (c) of FIG. 7, the synchronization timing t1C and the synchronization timing t1A coincide with each other by adjusting the temporal difference between the initiation timing t0C and the synchronization timing t1C.

In this way, the processor 103 of the control device 100C performs the following adjustment process 180 when the time from the initiation timing t0C to the synchronization timing t1C (the temporal difference Ts) is shorter than the time from the initiation timing t0A to the synchronization timing t1A (the temporal difference Tm). That is, the processor 103 of the control device 100C adjusts the phase difference of the control period TcC with respect to the control period TcA in order that the initiation timing t0C and the initiation timing t0A coincide with each other. Furthermore, the processor 103 of the control device 100C adjusts the temporal difference between the initiation timing t0C and the synchronization timing t1C to the time from the initiation timing t0A to the synchronization timing t1A. Thereby, the synchronization timing t1C and the synchronization timing t1A coincide with each other, and the field instrument 200d connected to the control device 100C can operate in coordination with the field instrument 200a connected to the control device 100A or the field instrument 200b connected to the control device 100B.

### <G. Second specific example of adjustment process>

Next, a second specific example of the adjustment process 180 (see FIG. 5) in the control device 100 according to the embodiment is described.

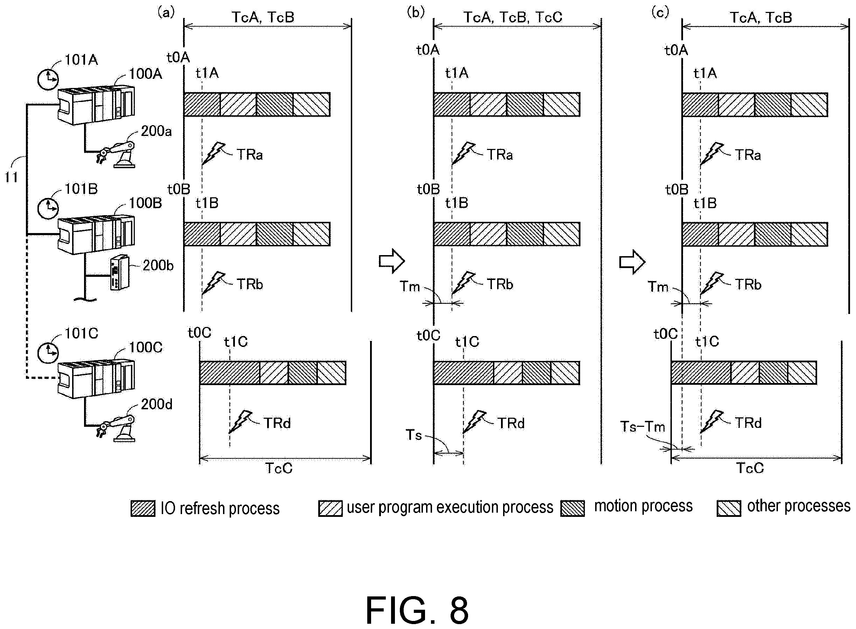

FIG. 8 is a schematic diagram for illustrating the second specific example of the adjustment process in the control device according to the embodiment. Similar to (a) of FIG. 7, (a) of FIG. 8 shows a schedule of the control process of each control device when the control device 100C is not connected to the network 11.

When the control device 100C is connected to the control devices 100A and 100B via the network 11, the length of the control period TcC is adjusted to be the same as the length of the control period TcA (= the control period TcB) by the adjustment process 180 of the control device 100C. Furthermore, the timer 101C of the control device 100C is adjusted by the upper network time synchronization process 178 (see FIG. 5) so as to be time-synchronized with the timer 101A of the control device 100A.

(b) of FIG. 8 shows a schedule of the control process of each control device when the timer 101C is time-synchronized with the timer 101A. The control devices 100A to 100C initiate the IO refresh process at the same timing according to the time of the timers that are time-synchronized with each other. That is, the initiation timing t0A of the IO refresh process in the control device 100A and the initiation timing t0C of the IO refresh process in the control device 100C coincide with each other. However, the temporal difference Ts between the initiation timing t0C and the synchronization timing t1C in the control period TcC is different from the temporal difference Tm between the initiation timing t0A and the synchronization timing t1A in the control period TcA. In the example shown in FIG. 8, the temporal difference Ts is longer than the temporal difference Tm. Therefore, the field instrument 200d connected to the control device 100C cannot operate in coordination with the field instrument 200a connected to the control device 100A or the field instrument 200b connected to the control device 100B.

When the temporal difference Ts is longer than the temporal difference Tm, if the temporal difference between the initiation timing t0C and the synchronization timing t1C is adjusted to Tm as in the first specific example, the following problems may occur. That is, the field instrument 200d is required to initiate the processes for the control subject before receiving the data from the control device 100C.

Therefore, in the control device 100C in the second specific example, in order to make the synchronization timing t1C coincide with the synchronization timings t1A and t1B, the adjustment process 180 for adjusting the phase difference of the control period TcC with respect to the control periods TcA and TcB is performed. That is, the phase difference of the control period TcC with respect to the control periods TcA and TcB is adjusted in order that the initiation timing t0C is earlier than the initiation timings t0A and t0B by the difference ΔT (= Ts - Tm) between the temporal difference Ts and the temporal difference Tm.

(c) of FIG. 8 shows a schedule of the control process of each control device after the phase difference of the control period TcC with respect to the control periods TcA and TcB is adjusted. As shown in (c) of FIG. 8, the synchronization timing t1C and the synchronization timings t1A and t1B coincide with each other by adjusting the phase difference of the control period TcC with respect to the control periods TcA and TcB.

In this way, when the time from the initiation timing t0C to the synchronization timing t1C (the temporal difference Ts) and the time from the initiation timing t0A to the synchronization timing t1A (the temporal difference Tm) are different, the processor 103 of the control device 100C performs the following adjustment process 180. That is, the processor 103 of the control device 100C adjusts the phase difference of the control period TcC with respect to the control period TcA in order that the initiation timing t0C is shifted from the initiation timing t0A by the difference between the temporal difference Ts and the temporal difference Tm. Thereby, the synchronization timing t1C and the synchronization timing t1A coincide with each other, and the field instrument 200d connected to the control device 100C can operate in coordination with the field instrument 200a connected to the control device 100A or the field instrument 200b connected to the control device 100B.

### <H. Flow of connection process between control device 100C and control devices 100A and 100B>

Next, a flow of the connection process between the control device 100C and the control devices 100A and 100B according to the embodiment is described.

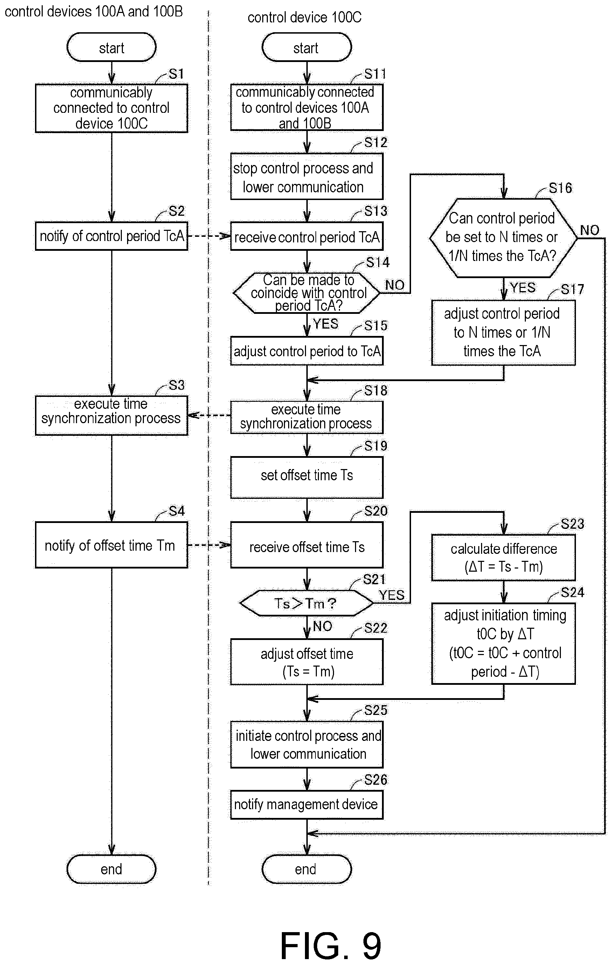

FIG. 9 is a flowchart showing an example of the flow of the connection process between the plurality of control devices according to the embodiment.

First, the control device 100C is communicably connected to the control devices 100A and 100B via the network 11 (steps S 1 and S11). When the control device 100C is communicably connected to the control devices 100A and 100B, the control process for the field instrument 200 connected via the field network 10C and the communication with this field instrument 200 are stopped (step S12). Moreover, each of the control devices 100A and 100B continuously executes the control process for the field instrument 200 connected via the field network 10 and the communication with the field instrument 200.

Next, the control device 100A notifies the control device 100C of the length of the control period TcA via the network 11 (step S2). Moreover, the lengths of the control periods TcA and TcB are preset to be the same. Therefore, it is sufficient that one of the control devices 100A and 100B (here, the control device 100A) notifies of the length of the control period of the control device itself. Then, the control device 100C receives the length of the control period TcA (step S13).

Next, in the control device 100C, whether the length of the control period TcC can be made to coincide with the length of the control period TcA is judged (step S14). This judgment is made in consideration of the time required for each process (the IO refresh process, the user program execution process, the motion process, and other processes) executed by the control device 100C.

When the length of the control period TcC can be made to coincide with the length of the control period TcA (YES in step S14), in the control device 100C, the length of the control period TcC is adjusted to the length of the control period TcA (step S15).

When the length of the control period TcC cannot be made to coincide with the length of the control period TcA (NO in step S14), in the control device 100C, whether the length of the control period TcC can be made to coincide with N times or 1/N times the length of the control period TcA is judged (step S16). Here, N is a positive integer.

When the length of the control period TcC can be made to coincide with N times or 1/N times the length of the control period TcA (YES in step S16), in the control device 100C, the length of the control period TcC is adjusted to N times or 1/N times the length of the control period TcA (step S17).

When the length of the control period TcC cannot be made to coincide with N times or 1/N times the length of the control period TcA (NO in step S16), the connection process ends. In this case, the control device 100C controls the field instrument 200 connected via the field network 10C independently of the control devices 100A and 100B.

After step S15 or step S17, each of the control devices 100A to 100C executes a time synchronization process for adjusting the timer 101 (see FIG. 4) by the time synchronization protocol in the network 11 (steps S3 and S18). The time synchronization can be realized by adopting a high-precision time synchronization protocol such as Institute of Electrical and Electronics Engineers (IEEE) IEEE1588, IEEE802.1AS, IEEE802.1AS-REV, or the like as the time synchronization protocol.

Next, in the control device 100C, the synchronization timing t1C in the control period TcC is set. That is, the temporal difference (offset time) Ts between the reference timing (here, the initiation timing t0C of the IO refresh process) and the synchronization timing t1C of the control period TcC is set (step S19). The control device 100C sets the temporal difference Ts in consideration of the time required for all the field instruments 200 to receive data after initiating the IO refresh process. Specifically, the control device 100C sets, as the temporal difference Ts, a time that is slightly longer than the time required for all field instruments 200 to receive data after initiating the IO refresh process.

Next, the control device 100A notifies, via the network 11, the control device 100C of the temporal difference (offset time) Tm between the initiation timing t0A of the IO refresh process and the synchronization timing t1A in the control period TcA (step S4). Moreover, the temporal difference (offset time) between the initiation timing t0B of the IO refresh process and the synchronization timing t1B in the control period TcB is the same as Tm. Therefore, it is sufficient that one of the control devices 100A and 100B (here, the control device 100A) notifies of the temporal difference Tm. Then, the control device 100C receives the temporal difference Tm (step S20).

In the control device 100C, whether the temporal difference Ts is longer than the temporal difference Tm is determined (step S21). When the temporal difference Ts is shorter than the temporal difference Tm (NO in step S21), in the control device 100C, the adjustment process 180 is performed which increase the temporal difference between the initiation timing t0C and the synchronization timing t1C to Tm (step S22). The adjustment method in step S22 corresponds to the adjustment method in the first specific example described above. Thereby, the synchronization timing t1C coincides with the synchronization timing t1A.

On the other hand, when the temporal difference Ts is equal to or greater than the temporal difference Tm (YES in step S21), in the control device 100C, the difference ΔT (= Ts - Tm) between the temporal difference Ts and the temporal difference Tm is calculated (step S23). Thereafter, in the control device 100C, the phase difference of the control period TcC with respect to the control period TcA is adjusted in order that the initiation timing t0C is earlier than the initiation timing t0A by the difference ΔT (step S24). Specifically, the time of the initiation timing t0C after the adjustment is adjusted to (the time of the initiation timing t0C before the adjustment) + (control period TcC - ΔT). The adjustment method of steps S23 and S24 corresponds to the adjustment method of the second specific example described above. Thereby, the synchronization timing t1C coincides with the synchronization timing t1A.

After step S22 or step S24, the control device 100C initiates the control process for the field instrument 200 connected via the field network 10C and the communication process with the field instrument 200 (step S25). The control device 100C notifies the device/line management device 190 via the network 11 that the adjustment for causing the synchronization timing t1C to coincide with the synchronization timing t1A ends (step S26). After step S26, the adjustment process ends. Upon receiving the notification that the adjustment ends, the device/line management device 190 initiates a process of managing the control devices 100A to 100C in a manner that the plurality of field instruments 200 connected to the control devices 100A to 100C operate in coordination with each other. Thereby, the field instrument 200 connected to the control device 100C can operate in coordination with the field instrument 200 connected to the control device 100A or the control device 100B.

### <I. Modification example>

In the example shown in FIG. 9, the adjustment method of the first specific example (corresponding to step S22) and the adjustment method of the second specific example (steps S23 and S24) are switched according to the magnitude relationship between the temporal difference (offset time) Ts and the temporal difference (offset time) Tm. However, the adjustment method of the second specific example (steps S23 and S24) may be executed regardless of the magnitude relationship between the temporal difference Ts and the temporal difference Tm.

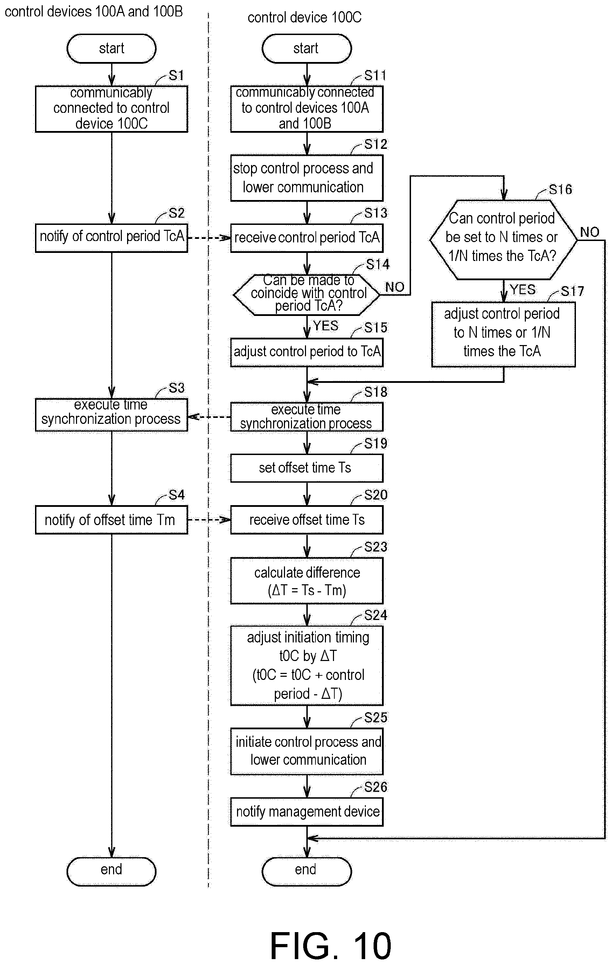

FIG. 10 is a flowchart showing another example of the flow of the connection process between the plurality of control devices. The flowchart shown in FIG. 10 differs from the flowchart shown in FIG. 9 in that steps S21 and S22 are omitted. That is, when the control device 100C receives the temporal difference (offset time) Tm from the control device 100A, the control device 100C executes steps S23 and S24.

Specifically, in step S24, the time of the initiation timing t0C after the adjustment is adjusted to (the time of the initiation timing t0C before the adjustment) + (the control period TcC - ΔT). That is, when the temporal difference Ts is longer than the temporal difference Tm, the phase difference of the control period TcC with respect to the control periods TcA and TcB is adjusted in order that the initiation timing t0C is earlier than the initiation timings t0A and t0B by the difference ΔT (= Ts - Tm). When the temporal difference Ts is shorter than the temporal difference Tm, the phase difference of the control period TcC with respect to the control periods TcA and TcB is adjusted in order that the initiation timing t0C is delayed from the initiation timings t0A and t0B by the absolute value (Tm - Ts) of the difference ΔT (= Ts - Tm). Thereby, the synchronization timing t1C coincides with the synchronization timing t1A.

### <J. First application example>

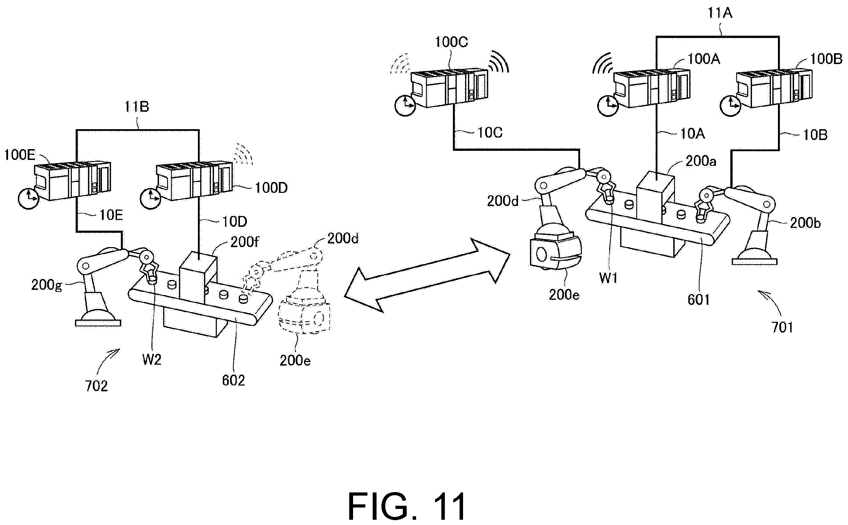

FIG. 11 is a schematic diagram showing a first application example of the control system according to the embodiment. FIG. 11 shows an example in which the control system is applied to a production line 701 that processes a workpiece W1 transported by a transport belt 601 and a production line 702 that processes a workpiece W2 transported by a transport belt 602.

In the production line 701, after the field instrument 200a processes the workpiece W1 (for example, attaching a label), the field instrument 200b grips the workpiece W1 and transports the workpiece W1 to the next processing. The field instrument 200a is connected to the control device 100A via the field network 10A. The field instrument 200b is connected to the control device 100B via the field network 10B. The control devices 100A and 100B are connected to the network 11A, and the synchronization timings t1 of the control devices 100A and 100B are made to coincide in order that the field instruments 200a and 200b operate in coordination with each other.

In the production line 702, after a field instrument 200f processes the workpiece W2 (for example, attaching a label), a field instrument 200g grips the workpiece W2 and transports the workpiece W2 to the next processing. The field instrument 200f is connected to a control device 100D via a field network 10D. A field instrument 200g is connected to a control device 100E via a field network 10E. The control devices 100D and 100E are connected to a network 11B, and synchronization timings t1 of the control devices 100D and 100E are made to coincide in order that the field instruments 200f and 200g operate in coordination with each other.

A field instrument 200e is a traveling robot that moves between the production line 701 and the production line 702.

A field instrument 200d is mounted on the field instrument 200e and moves between the production line 701 and the production line 702 together with the field instrument 200e. When reaching the production line 701, the field instrument 200d grips the workpiece W1 loaded on a pallet (not shown) and mounts the workpiece W1 on the transport belt 601. When reaching the production line 702, the field instrument 200d grips the workpiece W2 loaded on another pallet (not shown) and mounts the workpiece W2 on the transport belt 602.

The field instruments 200d and 200e are connected to the control device 100C via the field network 10C. The control device 100C makes a wireless communication connection to the network 11A when the field instruments 200d and 200e reach the production line 701. Besides, in the control device 100C, the adjustment process 180 is executed in order that the synchronization timing t1 of the control device 100C coincides with the synchronization timing t1 of the control device 100A. Thereby, the field instrument 200d can operate in coordination with the field instruments 200a and 200b on the production line 701.

Similarly, the control device 100C makes a wireless communication connection to the network 11B when the field instruments 200d and 200e reach the production line 702. Besides, in the control device 100C, the adjustment process 180 is executed in order that the synchronization timing t1 of the control device 100C coincides with the synchronization timing t1 of the control device 100D. Thereby, the field instrument 200d can operate in coordination with the field instruments 200f and 200g on the production line 702.

### <K. Second application example>

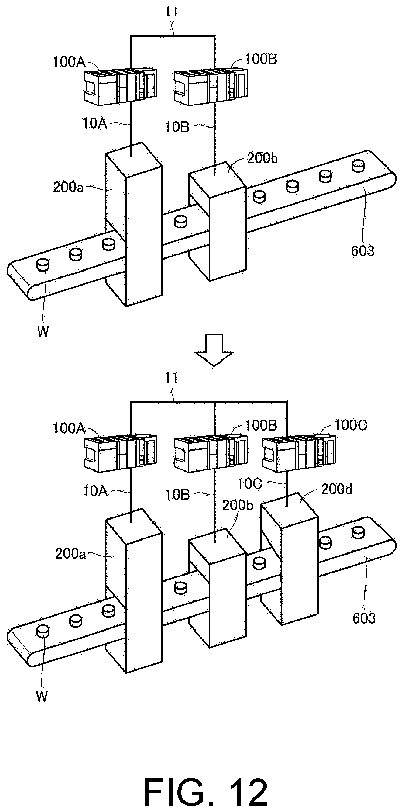

FIG. 12 is a schematic diagram showing a second application example of the control system according to the embodiment. FIG. 12 shows an example in which the control system is applied to a production line that processes a workpiece transported by a transport belt 603.

In the production line, after the field instrument 200a processes the workpiece W, the field instrument 200b performs other processes on the workpiece W. The field instrument 200a is connected to the control device 100A via the field network 10A. The field instrument 200b is connected to the control device 100B via the field network 10B. The control devices 100A and 100B are connected to the network 11A, and the synchronization timings t1 of the control devices 100A and 100B are made to coincide in order that the field instruments 200a and 200b operate in coordination with each other.

It is assumed that an additional process is required for the workpiece W due to the change in the type of manufactured product. In this case, a field instrument 200d for performing the additional process and a control device 100C connected to this field instrument 200d via the field network 10C are introduced into the production line. At this time, in the control device 100C newly connected to the network 11, the adjustment process 180 for causing a synchronization timing t1 of the control device 100C to coincide with the synchronization timing t1 of the control device 100A is executed. Thereby, the field instrument 200d can operate in coordination with the field instruments 200a and 200b without stopping the operation of the field instruments 200a and 200b.

### <L. Third application example>

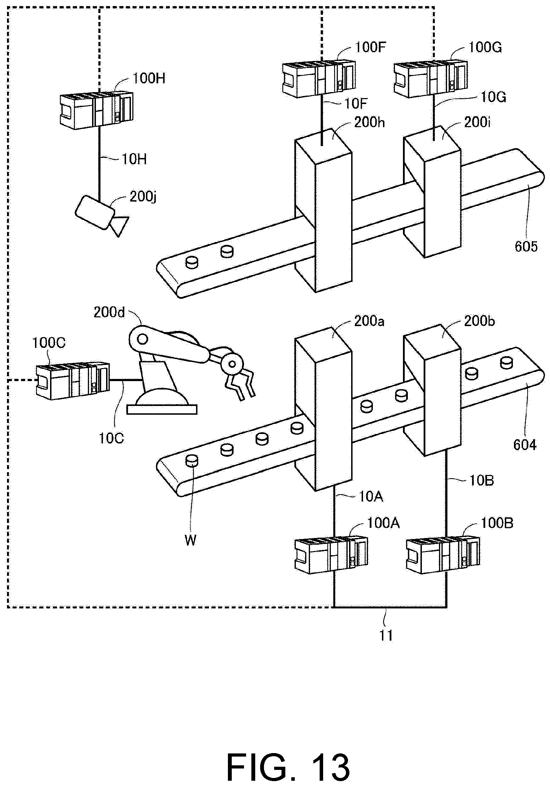

FIG. 13 is a schematic diagram showing a third application example of the control system according to the embodiment. FIG. 13 shows an example in which the control system is applied to a production line 704 that processes a workpiece W transported by a transport belt 604.

In the production line 704, after the field instrument 200a processes the workpiece W, the field instrument 200b performs other processes on the workpiece W. The field instrument 200a is connected to the control device 100A via the field network 10A. The field instrument 200b is connected to the control device 100B via the field network 10B. The control devices 100A and 100B are connected to the network 11A, and the synchronization timings t1 of the control devices 100A and 100B are made to coincide in order that the field instruments 200a and 200b operate in coordination with each other.

A production line 705 having the same configuration as the production line 704 is installed in preparation for an increase in production volume. In the production line 705, after a field instrument 200h processes the workpiece W on a transport belt 605, a field instrument 200i performs other processes. The field instruments 200h and 200i respectively have the same configuration as the field instruments 200a and 200b. The field instrument 200h is connected to a control device 100F via a field network 10F. The field instrument 200i is connected to a control device 100G via a field network 10G.

The field instrument 200d is a robot for moving the workpiece W on one of the transport belts 604 and 605 onto the other. A field instrument 200j is a visual sensor for grasping the number of the workpieces W on the transport belt 604 and the number of the workpieces W on the transport belt 605. The field instrument 200d is connected to the control device 100C via the field network 10C. The field instrument 200j is connected to a control device 100H via a field network 10H.

When the production number is increased, the control devices 100C to 100H are connected to the network 11. In each of the control devices 100C to 100H, the adjustment process 180 is executed which makes the synchronization timings t1 of the control devices 100C to 100H coincide with the synchronization timing t1 of the control device 100A. Thereby, the field instruments 200d and 200h to 200j can operate in coordination with the field instruments 200a and 200b without stopping the operation of the field instruments 200a and 200b. Specifically, the field instrument 200j recognizes the number of the workpieces W on the transport belt 604 and the number of the workpieces W on the transport belt 605 based on a captured image. The field instrument 200d moves, based on the recognition result of the field instrument 200j, workpieces W from the one of the belts 604 and 605 with the larger number of workpieces W to the one with the smaller number of workpieces. Thereby, the increase in the production number can be appropriately coped with.

### <M. Advantages>

As described above, according to the embodiment, the control device 100C and the field instrument 200d respectively have the timers 102C and 201d synchronized with each other. The control device 100C includes the field network controller 140 that transmits/receives the data to/from the field instrument 200d in each control period TcC based on the time of the timer 102C. The control device 100C includes the processor 103 that sets the synchronization timing t1C after the field instrument 200d receives the data in the control period TcC. The field instrument 200d initiates the processes for the control subject 500 in synchronization with the synchronization timing t1C based on the time of the timer 201d. Similarly, the control device 100A also includes the timer 102A, the field network controller 140 and the processor 103. The field instrument 200a connected to the control device 100A initiates the processes for the control subject 500 in synchronization with the synchronization timing t1A based on the time of the timer 201a time-synchronized with the timer 102A. When the control device 100C and the control device 100A are connected to each other via the network 11, the processor 103 of the control device 100C performs the adjustment process 180. The adjustment process 180 is the process of adjusting at least one of the following (a) to (c) in order that the synchronization timing t1C and the synchronization timing t1A coincide with each other.
(a) Length of the control period TcC,
(b) Phase difference of the control period TcC with respect to the control period TcA, and
(c) Temporal difference between the reference timing of the control period TcC (for example, the initiation timing t0C) and the synchronization timing t1C.

Thereby, the synchronization timing t1C coincides with the synchronization timing t1A. As a result, the field instrument 200d can operate in coordination with the field instrument 200a connected to the control device 100A. At this time, the control device 100A does not need to adjust the length of the control period, the phase of the control period, and the temporal difference between the synchronization timing and the reference timing in the control period. That is, the control device 100A does not need to be stopped in order to initiate the coordination operation of the field instrument 200a and the field instrument 200d. This makes it possible to cause the plurality of field instruments connected to the mutually different control devices to operate in coordination with each other while suppressing a reduction in operation rate. Furthermore, dynamic reorganization of the production lines can be done efficiently.

### [Reference Signs List]

1 control system
10, 10A to 10H field network
11, 11A, 11B, 12 to 14 network
100, 100A to 100H control device
101, 101A to 101C, 102, 102A to 102C, 201, 201a to 201d timer
103 processor
104 memory
106 storage
107 system program
108 user application program
130 network controller
131, 141, 212 transmission and reception controller
132, 142 transmission and reception buffer
140, 210 field network controller
170 scheduler
171 user program execution process
172 motion process
173 peripheral process
174 upper network communication process
176 lower network communication process
178 upper network time synchronization process
179 lower network time synchronization process
180 adjustment process
190 device/line management device
195 display device
200, 200a to 200j field instrument
214 trigger signal generation circuit
216 processing portion
250 manufacturing management device
255 database device
300 production management device
500 control subject
601 to 605 transport belt
701, 702, 704, 705 production line

## Claims

1. A control system (1), comprising:
a first control device (100C);
one or more first instruments (200d) connected to the first control device (100C) via a first network (10C);
a second control device (100A, 100B); and
one or more second instruments (200a~200c) connected to the second control device (100A, 100B) via a second network (10A, 10B), wherein
the first control device (100C) and each of the one or more first instruments (200d) comprise first timers (102C, 201d) synchronized with each other;
the first control device (100C) comprises:
a first communication part (140) that is configured to transmit/receive first data to/from the one or more first instruments (200d) in a first control period based on time of the first timer (102C) of the first control device (100C), and
a first scheduling part (103) that is configured to set a first synchronization timing after the one or more first instruments (200d) receive the first data within the first control period;
the one or more first instruments (200d) are configured to initiate, based on the time of the first timers (102C, 201d) of the one or more first instruments synchronized with the first control device, a process on a control subject in synchronization with the first synchronization timing;
the second control device (100A, 100B) and each of the one or more second instruments (200a~200c) comprise second timers (102A, 102B, 201a~201c) synchronized with each other;
the second control device (100A, 100B) comprises:
a second communication part (140) that is configured to transmit/receive second data to/from the one or more second instruments in a second control period based on time of the second timers (102A, 102B) of the second control device (100A, 100B), and
a second scheduling part (103) that is configured to set a second synchronization timing after the one or more second instruments (200a-200c) receive the second data within the second control period;
the one or more second instruments (200a~200c) are configured to initiate, based on the time of the second timers (201a~201c) of the one or more second instruments synchronized with the second control device, a process on the control subject in synchronization with the second synchronization timing; and
the first control device (100C) further comprises an adjustment part (103) that is configured to adjust, when the first control device (100C) and the second control device (100A, 100B) are connected via a third network (11) that has an upper level than the first network (10C) and the second network (10A, 10B) in which the third network (11) is defined as a control level network and the first network (10C) and the second network (10A, 10B) are defined as field networks, at least one of a length of the first control period, a phase difference of the first control period with respect to the second control period, and a temporal difference between a reference timing of the first control period and the first synchronization timing of the first control period in order that the first synchronization timing and the second synchronization timing coincide with each other,
wherein when the length of the first control period is different from a length of the second control period, the adjustment part (103) corrects the length of the first control period to N times or 1/N times the length of the second control period; and
N is an integer greater than or equal to 1,
wherein the reference timing is a first initiation timing at which the first communication part (140) is configured to initiate transmission of the first data, and
when the temporal difference is shorter than a time from a second initiation timing at which the second communication part (140) is configured to initiate transmission of the second data to the second synchronization timing, the adjustment part (103) is configured to adjust the phase difference in order that the first initiation timing and the second initiation timing coincide with each other, and to adjust the temporal difference to the time from the second initiation timing to the second synchronization timing.

2. The control system according to claim 1, wherein when a first time from a first initiation timing at which the first communication part (140) is configured to initiate transmission of the first data to the first synchronization timing is different from a second time from a second initiation timing at which the second communication part (140) is configured to initiate transmission of the second data to the second synchronization timing, the adjustment part (103) is configured to adjust the phase difference in order that the first initiation timing is shifted from the second initiation timing by a difference between the first time and the second time.

3. The control system according to claim 2, wherein when the first time is longer than the second time, the adjustment part (103) is configured to adjust the phase difference in order that the first initiation timing is earlier than the second initiation timing.

## Patentansprüche

1. Steuersystem (1), das umfasst:
eine erste Steuervorrichtung (100C);
ein oder mehrere erste Instrumente (200d), die mit der ersten Steuervorrichtung (100C) über ein erstes Netzwerk (10C) verbunden sind;
eine zweite Steuervorrichtung (100A, 100B); und
ein oder mehrere zweite Instrumente (200a~200c), die mit der zweiten Steuereinrichtung (100A, 100B) über ein zweites Netzwerk (10A, 10B) verbunden sind, wobei
die erste Steuervorrichtung (100C) und jedes der einen oder mehreren ersten Instrumente (200d) erste Zeitgeber (102C, 201d) umfassen, die miteinander synchronisiert sind;
wobei die erste Steuervorrichtung (100C) umfasst:
ein erstes Kommunikationsteil (140), das konfiguriert ist, um in einer ersten Steuerperiode basierend auf der Zeit des ersten Zeitgebers (102C) der ersten Steuervorrichtung (100C) erste Daten zu/von dem einen oder den mehreren ersten Instrumenten (200d) zu übertragen/empfangen, und
ein erstes Planungsteil (103), das konfiguriert ist, um ein erstes Synchronisations-Timing festzusetzen, nachdem das eine oder die mehreren ersten Instrumente (200d) die ersten Daten innerhalb der ersten Steuerperiode empfangen haben;
das eine oder die mehreren ersten Instrumente (200d) konfiguriert sind, um basierend auf der Zeit der ersten Zeitgeber (102C, 201d) des einen oder der mehreren ersten Instrumente, die mit der ersten Steuervorrichtung synchronisiert sind, einen Prozess auf einem Steuersubjekt in Synchronisation mit dem ersten Synchronisations-Timing zu initiieren;
die zweite Steuervorrichtung (100A, 100B) und jedes der einen oder mehreren zweiten Instrumente (200a - 200c) zweite Zeitgeber (102A, 102B, 201a - 201c) umfassen, die miteinander synchronisiert sind;
wobei die zweite Steuervorrichtung (100A, 100B) umfasst:
ein zweites Kommunikationsteil (140), das konfiguriert ist, um in einer zweiten Steuerperiode basierend auf der Zeit der zweiten Zeitgeber (102A, 102B) der zweiten Steuervorrichtung (100A, 100B) zweite Daten zu/von dem einen oder mehreren zweiten Instrumenten zu übertragen/empfangen, und
ein zweites Planungsteil (103), das konfiguriert ist, um ein zweites Synchronisations-Timing festzusetzen, nachdem das eine oder die mehreren zweiten Instrumente (200a-200c) die zweiten Daten innerhalb der zweiten Steuerperiode empfangen;
das eine oder die mehreren zweiten Instrumente (200a~200c) konfiguriert sind, um basierend auf Zeit der zweiten Zeitgeber (201a~201c) des einen oder der mehreren zweiten Instrumente, die mit der zweiten Steuervorrichtung synchronisiert sind, einen Prozess auf dem Steuersubjekt synchron mit dem zweiten Synchronisations-Timing zu initiieren; und
die erste Steuervorrichtung (100C) ferner ein Einstellteil (103) umfasst, das konfiguriert ist, um einzustellen, wenn die erste Steuervorrichtung (100C) und die zweite Steuervorrichtung (100A, 100B) über ein drittes Netzwerk (11) verbunden sind, das eine höhere Ebene als das erste Netzwerk (10C) und das zweite Netzwerk (10A, 10B) aufweist, wobei das dritte Netzwerk (11) als ein Steuerebenen-Netzwerk definiert ist und das erste Netzwerk (10C) und das zweite Netzwerk (10A, 10B) als Feld-Netzwerke definiert sind, wenigstens eines von einer Länge der ersten Steuerperiode, einer Phasendifferenz der ersten Steuerperiode in Bezug auf die zweite Steuerperiode und einer zeitlichen Differenz zwischen einem Referenz-Timing der ersten Steuerperiode und dem ersten Synchronisations-Timing der ersten Steuerperiode, damit das erste Synchronisations-Timing und das zweite Synchronisations-Timing miteinander übereinstimmen,
wobei, wenn die Länge der ersten Steuerperiode sich von einer Länge der zweiten Steuerperiode unterscheidet, das Einstellteil (103) die Länge der ersten Steuerperiode auf das N-fache oder 1/N-fache der Länge der zweiten Steuerperiode korrigiert; und
N eine ganze Zahl größer als oder gleich 1 ist,
wobei das Referenz-Timing ein erstes Initiierungs-Timing ist, bei dem das erste Kommunikationsteil (140) konfiguriert ist, um Übertragung der ersten Daten zu initiieren, und
wenn die zeitliche Differenz kürzer als eine Zeit von einem zweiten Initiierungs-Timing ist, bei dem das zweite Kommunikationsteil (140) konfiguriert ist, um Übertragung der zweiten Daten an das zweite Synchronisations-Timing zu initiieren, das Einstellteil (103) konfiguriert ist, um die Phasendifferenz einzustellen, so dass das erste Initiierungs-Timing und das zweite Initiierungs-Timing miteinander übereinstimmen, und um die zeitliche Differenz zu der Zeit von dem zweiten Initiierungs-Timing bis zu dem zweiten Synchronisations-Timing einzustellen.

2. Steuersystem gemäß Anspruch 1, wobei, wenn eine erste Zeit von einem ersten Initiierungs-Timing, bei dem das erste Kommunikationsteil (140) konfiguriert ist, um Übertragung der ersten Daten zu dem ersten Synchronisations-Timing zu initiieren, von einer zweiten Zeit von einem zweiten Initiierungs-Timing, bei dem das zweite Kommunikationsteil (140) konfiguriert ist, um Übertragung der zweiten Daten zu dem zweiten Synchronisations-Timing zu initiieren, verschieden ist, das Einstellteil (103) konfiguriert ist, um die Phasendifferenz einzustellen, damit das erste Initiierungs-Timing von dem zweiten Initiierungs-Timing um eine Differenz zwischen der ersten Zeit und der zweiten Zeit verschoben ist.

3. Steuersystem gemäß Anspruch 2, wobei, wenn die erste Zeit länger als die zweite Zeit ist, das Einstellteil (103) konfiguriert ist, um die Phasendifferenz einzustellen, damit das erste Initiierungs-Timing früher als das zweite Initiierungs-Timing ist.

## Revendications

1. Système de commande (1), comprenant :
un premier dispositif de commande (100C) ;
un ou plusieurs premiers instruments (200d) reliés au premier dispositif de commande (100C) via un premier réseau (10C) ;
un deuxième dispositif de commande (100A, 100B) ; et
un ou plusieurs deuxièmes instruments (200a~200c) reliés au deuxième dispositif de commande (100A, 100B) via un deuxième réseau (10A, 10B), dans lequel
le premier dispositif de commande (100C) et chacun des un ou plusieurs premiers instruments (200d) comprennent des premières minuteries (102C, 201d) synchronisées les unes avec les autres ;
le premier dispositif de commande (100C) comprend :
une première partie de communication (140) qui est configurée pour émettre/recevoir des premières données aux/depuis les un ou plusieurs premiers instruments (200d) dans une première période de commande sur la base d'un temps de la première minuterie (102C) du premier dispositif de commande (100C), et
une première partie de planification (103) qui est configurée pour régler une première temporisation de synchronisation après que les un ou plusieurs premiers instruments (200d) reçoivent les premières données au cours de la première période de commande ;
les un ou plusieurs premiers instruments (200d) sont configurés pour initier, sur la base du temps des premières minuteries (102C, 201d) des un ou plusieurs premiers instruments synchronisés avec le premier dispositif de commande, un processus sur un sujet de commande en synchronisation avec la première temporisation de synchronisation ;
le deuxième dispositif de commande (100A, 100B) et chacun des un ou plusieurs deuxièmes instruments (200a~200c) comprennent des deuxièmes minuteries (102A, 102B, 201a~201c) synchronisées les unes avec les autres ;
le deuxième dispositif de commande (100A, 100B) comprend :
une deuxième partie de communication (140) qui est configurée pour émettre/recevoir des deuxièmes données aux/depuis les un ou plusieurs deuxièmes instruments dans une deuxième période de commande sur la base d'un temps des deuxièmes minuteries (102A, 102B) du deuxième dispositif de commande (100A, 100B), et
une deuxième partie de planification (103) qui est configurée pour régler une deuxième temporisation de synchronisation après que les un ou plusieurs deuxièmes instruments (200a~200c) reçoivent les deuxièmes données au cours de la deuxième période de commande ;
les un ou plusieurs deuxièmes instruments (200a~200c) sont configurés pour initier, sur la base du temps des deuxièmes minuteries (201a~201c) des un ou plusieurs deuxièmes instruments synchronisés avec le deuxième dispositif de commande, un processus sur le sujet de commande en synchronisation avec la deuxième temporisation de synchronisation ; et
le premier dispositif de commande (100C) comprend en outre une partie d'ajustement (103) qui est configurée pour ajuster, lorsque le premier dispositif de commande (100C) et le deuxième dispositif de commande (100A, 100B) sont reliés via un troisième réseau (11) ayant un niveau plus élevé que le premier réseau (10C) et le deuxième réseau (10A, 10B) dans lequel le troisième réseau (11) est défini en tant que réseau de niveau de commande et le premier réseau (10C) et le deuxième réseau (10A, 10B) sont définis en tant que réseaux de champ, au moins l'une parmi une longueur de la première période de commande, une différence de phase de la première période de commande par rapport à la deuxième période de commande, et une différence temporelle entre une temporisation de référence de la première période de commande et la première temporisation de synchronisation de la première période de commande afin que la première temporisation de synchronisation et la deuxième temporisation de synchronisation coïncident l'une avec l'autre,
dans lequel, lorsque la longueur de la première période de commande est différente d'une longueur de la deuxième période de commande, la partie d'ajustement (103) corrige la longueur de la première période de commande à N fois ou 1/N fois la longueur de la deuxième période de commande ; et
N est un entier supérieur ou égal à 1,
dans lequel la temporisation de référence est une première temporisation d'initiation à laquelle la première partie de communication (140) est configurée pour initier une émission des premières données, et
lorsque la différence temporelle est plus courte qu'un temps d'une deuxième temporisation d'initiation à laquelle la deuxième partie de commande (140) est configurée pour initier une émission des deuxièmes données à la deuxième temporisation de synchronisation, la partie d'ajustement (103) est configurée pour ajuster la différence de phase afin que la première temporisation d'initiation et la deuxième temporisation d'initiation coïncident l'une avec l'autre, et pour ajuster la différence temporelle au temps de la deuxième temporisation d'initiation à la deuxième temporisation de synchronisation.

2. Système de commande selon la revendication 1, dans lequel, lorsqu'un premier temps d'une première temporisation d'initiation à laquelle la première partie de communication (140) est configurée pour initier une émission des premières données à la première temporisation de synchronisation est différente d'un deuxième temps d'une deuxième temporisation d'initiation à laquelle la deuxième partie de communication (140) est configurée pour initier une émission des deuxièmes données à la deuxième temporisation de synchronisation, la partie d'ajustement (103) est configurée pour ajuster la différence de phase afin que la première temporisation d'initiation soit décalée par rapport à la deuxième temporisation d'initiation d'une différence entre le premier temps et le deuxième temps.

3. Système de commande selon la revendication 2, dans lequel, lorsque le premier temps est plus long que le deuxième temps, la partie d'ajustement (103) est configurée pour ajuster la différence de phase afin que la première temporisation d'initiation soit antérieure à la deuxième temporisation d'initiation.
